# EUROPEAN PATENT APPLICATION

(11) **EP 2 397 382 A1**
(43) Date of publication of application: **21.12.2011**
(21) Application number: 11166582.4
(22) Date of filing: 18.05.2011
(51) Int. Cl.: B60S 5/04, F16L 37/12

(54) **Quick connector for inflation valve of a tyre**

(30) Priority: 18.06.2010 IT MI20101114
(71) Applicant: Bridgeport S.R.L., 24060 Bolgare (BG) (IT)
(72) Inventor: Leo, Leonardo, 25065, Lumezzane (BRESCIA) (IT); Martinelli, Stefano, 25040, Corte Franca (BRESCIA) (IT)
(74) Representative: Petruzziello, Aldo

(57) **Abstract**

A description is given of a quick connector (10) for an inflation valve (70) of a tyre or other pressurised container comprising a body (12) provided with an axial through hole (14) and means (20) of fitting to a pressurised fluid source and means (30, 40, 50) of fitting to the inflation valve. The means (30, 40, 50) for fitting to the inflation valve (70) comprise a piston (40) movable within the axial through hole (14) of the body (12) and suitable for co-operating with a release button (30) projecting from the body (12) and radially movable inside it, so as to allow the quick connector (10) to be pressure fitted to the inflation valve (70) and subsequently unfitted after inflation, by acting on the release button (30).

## Description

The present invention relates, in general, to the systems of inflation for tyres or other pressurised containers. More particularly the invention relates to a quick connector for the inflation valve of a tyre or other pressurised container.

The present invention will be described and illustrated with reference to one of its applications to the inflation valve of a tyre, but it is understood that the quick connector described therein can be used, in an equally advantageous manner, on a tank or pressurised container.

Two main types of connector for inflation valve of a tyre have been available on the market for some time: the pressurised type and the lever type.

In pressurised connectors the hooking between connector and inflation valve of the tyre takes place by keeping the connector pressed on the valve. In the lever connectors the fitting between connector and inflation valve takes place by means of a lever, which actuates a blade for gripping a threaded portion of the valve.

Both these known connectors have disadvantages.

In the case of a pressurised connector, for the correct performance of the operation of inflation, it is necessary for the user to exert a continuous and constant pressure on the connector, in order to maintain it hooked to the valve, for the entire duration of the phase of inflation.

In the case of a lever connector, the tightness of this connector depends on the reciprocal position between threaded portion of valve andⁱ blade of the connector. Consequently if, at the time of slotting of the blade in the thread, the compression of the seal necessary for the tightness is not sufficient, there are leaks of air from the connector, with consequent lengthening of the time necessary for the inflation of the tyre.

Moreover, in some types of tyre, the inflation valve is housed on the rim, in other words in a closed and confined space, and therefore difficult to reach, and this complicates the operation of hooking of the connector, whether of the pressurised or lever type.

The main object of the present invention is, therefore, that of eliminating, or at least reducing, the disadvantages stated above with reference to known connectors, making available a quick connector which can be fitted in a precise manner to an inflation valve of a tyre or other pressurised container, guaranteeing at the same time the maximum tightness in the inflation phase.

Yet another object of the present invention is that of providing a quick connector such as to allow the user to easily reach closed and confined spaces where at times some types of inflation valves are housed, for example the interior of the rim, in the case of an inflation valve of a tyre.

Another object of the present invention is that of providing a quick connector which is easy to handle and ergonomic.

Last but not least an object of the invention is that of providing a quick connector having a simple structure and which can be made at competitive production costs.

These and other objects, which will be made clearer herein below, are achieved in accordance with the invention with the features listed in the annexed independent claim 1.

According to the invention, therefore, a quick connector is provided for inflation valve of a tyre or other pressurised container comprising a body provided with axial through hole and means of fitting to a source of pressurised fluid and means of fitting to the inflation valve carried by the body, The quick connector is characterised in that the means of fitting to the inflation valve comprise a piston movable inside the axial through hole of the body of the connector and suitable for co-operating with a release button projecting from the body and radially movable therein, so as to allow the quick connector to be pressure-fitted to the inflation valve and subsequently unfitted after inflation, by acting on the release button.

Advantageous aspects of the invention are disclosed by the dependent claims.

Further features of the invention will be made clearer by the following detailed description, referred to one of its embodiments purely by way of a non-limiting example, illustrated in the accompanying drawings, in which:
Figure 1 is a perspective view of a quick connector according to the invention;
Figure 2 is a front view of the quick connector of Figure 1;
Figure 3 is a top view of the quick connector of Figure 2;
Figure 4 is a blown-up and sectioned view of the quick connector of Figure 2; and
Figures 5(a) to 5(d) are sectioned views which show the phases of fitting and unfitting between the quick connector of the invention and the inflation valve of a tyre or other pressurised container.

In the accompanying drawings identical or similar parts or components are denoted by the same reference numerals.

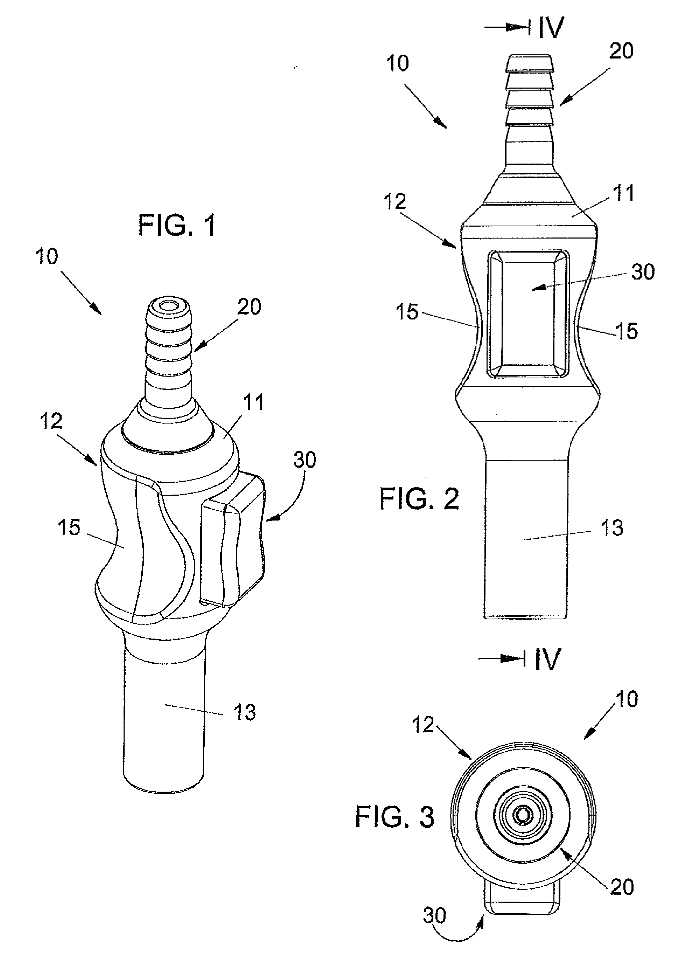

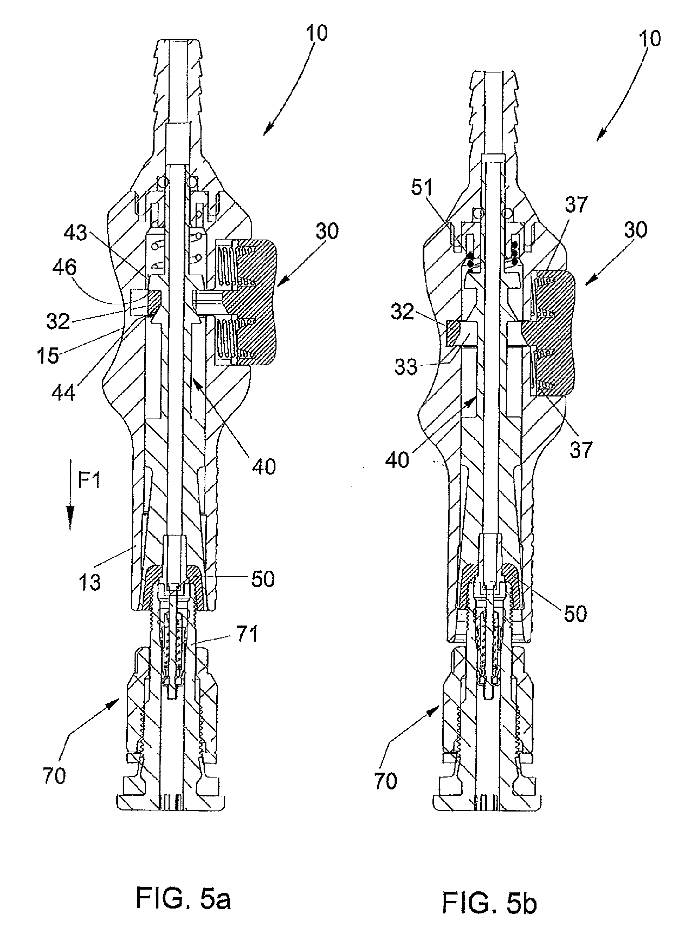

Referring to Figures 1 to 4, a quick connector according to the invention, denoted in general by reference numeral 10, comprises a body 12 and means 20 of fitting to a source of pressurised fluid and means 30, 40, 50 of fitting to the valve 70 (Figures 5(a)-5(d)) of inflation of a tyre, carried by the body 12.

More particularly the body 12 is provided with axial through hole 14 and comprises a main portion 11 and an extension 13, preferably cylindrical and rigid.

The main portion 11 of the body 12 preferably has opposite concavities 15, suitable for housing a user's fingers. The presence of these concavities 15 confers, advantageously, to the quick connector 10, ergonomic features, facilitating the gripping thereof and allowing a better application of the force of insertion on the inflation valve of the tyre.

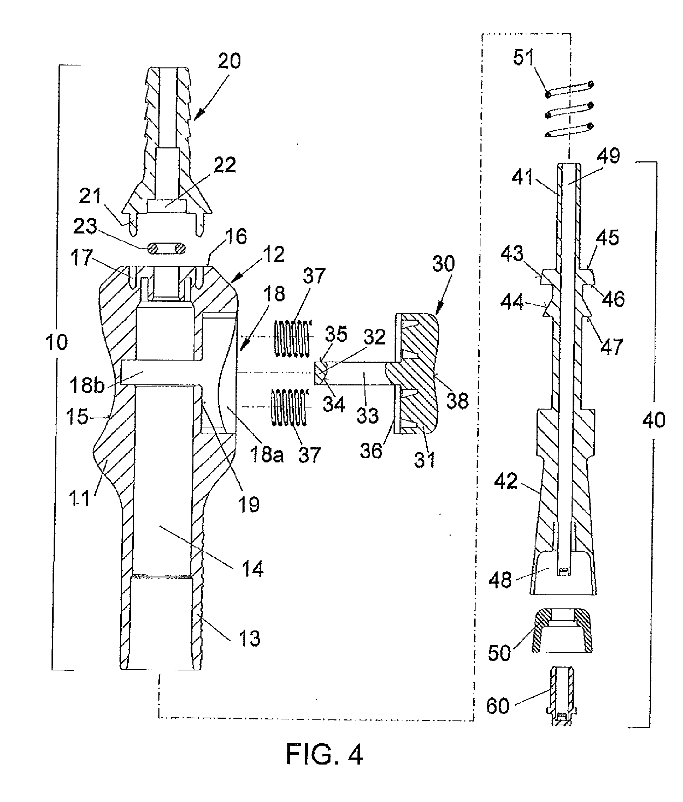

With special reference to Figure 4, the main portion 11 of the body 12 has an upper surface 16 of abutting of the means 20 of fitting to the source (not shown) of pressurised fluid, typically compressed air, such as for example a hose joint 20 and the like.

At the upper surface 16 the main portion 11 has recesses 17 suitable for receiving corresponding teeth 21 formed in the hose joint 20 for the slotted assembly of the latter on the body 12 of the quick connector 10.

Preferably, on the surface of the hose joint 20 for abutting against the upper surface 16 of the body 12, a circular seat 22 is formed for housing sealing means, for example an O-ring 23.

Naturally alternative methods of mounting of the means 20 for fitting to the pressurised fluid source can be provided, for example by threading and the like, or the means 20 of fitting with the pressurised fluid source can be formed in a single part with the body 12.

Moreover, at its lateral surface, the main portion 11 of the body 12 has a radial seat 18 for housing a button 30 for release of the quick connector 10 from the inflation valve of a tyre, whose function is to be described in greater detail herein below with reference to Figures 5(a) to 5(d).

More particularly the radial seat 18 has a first section 18a and a second section 18b. Preferably the first section 18a is substantially parallelepiped in shape and the second section 18b is substantially annular in shape. Naturally the radial seat 18 may take on alternative configurations according to the shape of the release button 30 housed therein.

Inside the axial through hole 14 of the main body 12 a piston 40 is slidingly housed and provided with a through opening 49 suitable for allowing the passage of the pressurised fluid from the fluid source to the inflation valve of the tyre.

More particularly the piston 40 comprises a substantially cylindrical upper end 41 suitable for co-operating, during use, with the hose joint 20 and a lower end tapered upwards 42, which, during use, is housed in the extension 13 of the body 12 and is suitable for co-operating with the inflation valve of the tyre.

Extending radially between the upper 41 and lower 42 ends are a first portion substantially conical in shape 44 and a second substantially frustoconical portion 43, which develops above the first conical portion 44, slightly distanced therefrom.

More particularly the first conical portion 44 defines a lower shoulder 47, while the second frustoconical portion 43 defines an upper shoulder 45 and a lower shoulder 46.

The upper end 41 preferably carries, moreover, elastic means 51, such as for example a compression spring, suitable for acting between the body 12 and the piston 40 so as to push the piston 40 constantly downwards to encourage its fitting and unfitting to/from the inflation valve of the tyre. More particularly the compression spring 51 acts between the body 12 and the upper shoulder 45 of the second frustoconical portion 43 of the piston 40. Moreover the compression spring 51 is appropriately calibrated to optimise the tightness between connector 10 and inflation valve.

In the lower end 42 of the piston 40 a seat 48 is moreover formed for housing sealing means 50. The sealing means are preferably made up of a seal 50, also tapered upwards like the lower portion 42 of the piston 40, which is locked into position in the seat 48 by means of a pawl 60.

During use the upward tapered lower end 42 is suitable for sliding, deforming, inside the axial through hole 14 of the body 12. This causes a simultaneous and reversible deformation of the seat 48 and of the seal 50 contained therein, which guarantees, advantageously, a pressure and seal fitting between the quick connector 10 and the inflation valve of the tyre,

The release button 30 has, in particular, a body 31 wherefrom a member 32 extends, provided with a recess 33. The body 31 is preferably and substantially parallelepiped, while the hollow member 32 is substantially annular.

During use the body 31 is suitable for being housed slidingly in the section 18a of the radial seat 18, while the hollow member 32 is suitable for sliding inside the second section 18b of the radial seat 18, intercepting the axial through hole 14 of the body 12.

In particular the recess 33 of the member 32 has a width slightly greater than the maximum radial extension of the piston 40, so as to allow the piston 40 to slide inside it, and a conical inner surface 34 with a taper complementary with respect to that of the first conical portion 44 of the piston 40.

Moreover the member 32 has a surface 35 suitable for abutting, during use, alternately, against the lower shoulder 47 of the first conical portion 44 of the piston 40 and the lower shoulder 46 of the second frustoconical portion 43 of the piston 40, as the quick connector 10 moves from the condition of unfitting from the tyre inflation valve to the condition of fitting to the same, and vice versa.

Between a lower surface 36 of the body 31 and bottom walls 19 of the first section 18a of the recess 18 seats are defined for housing respective elastic means, for example a pair of compression springs 37, whose function will be made clear herein below in the present description.

The body 31 of the release button 30 preferably has a slightly concave upper surface 38, suitable for encouraging the pressing of the button by a user.

Referring to Figures 5(a) to 5(d) a description is now given of the method of fitting of the quick connector 10 of the invention, for example, to a valve 70 for inflation of a tyre, starting from a rest condition, illustrated in detail in Figure 5(a). Naturally a wholly similar situation applies in the case of an inflation valve of a tank or pressurised container.

In this rest condition the release button 30 projects from the body 12 and the hollow member 32 is housed between the first conical portion 44 and the second frustoconical portion 43 of the piston 40, with the surface 35 abutting against the lower shoulder 46 of the second frustoconical portion 43 of the piston 40. The inflation valve 70 is not part of the present invention, so that it will not be further described in the present document.

To hook the connector 10 to the valve 70 the user has to grip the connector 10, preferably at the concavities 15, and insert with pressure the extension 13 of the body 12 on the upper end 71 of the valve 70 (arrow F1, Figure 5(a)) in contrast to the action exerted by the spring 51.

Thanks to the presence of the extension 13 and to the fact that the fitting takes place by exerting a light pressure in an axial direction, the connector 10 of the invention can be, advantageously, fitted easily to valves housed in closed and confined spaces.

As shown in Figure 5(b), following the pressure exerted on the connector 10, the piston 40 slides upwards inside the recess 33 of the member 32 of the release button 30.

The movement of the piston 40 from the unfitted or rest position, illustrated in Figure 5(a), to the fitted or working position, illustrated in Figure 5(b), causes the retraction of the release button 30 inside the radial seat 18 and the consequent compression of the springs 37. The spring 51 carried by the upper end 41 of the piston 40 is also compressed.

Moreover the upward sliding of the piston 40 in the recess 14 of the body 12 causes a deformation of the upward tapered lower end 42 and a consequent simultaneous and reversible deformation of the seat 48 for housing the sealing means 50 and the sealing means 50 contained therein. This guarantees, advantageously, the pressure fitting between connector 10 and valve 70, as well as the tightness during inflation of the tyre.

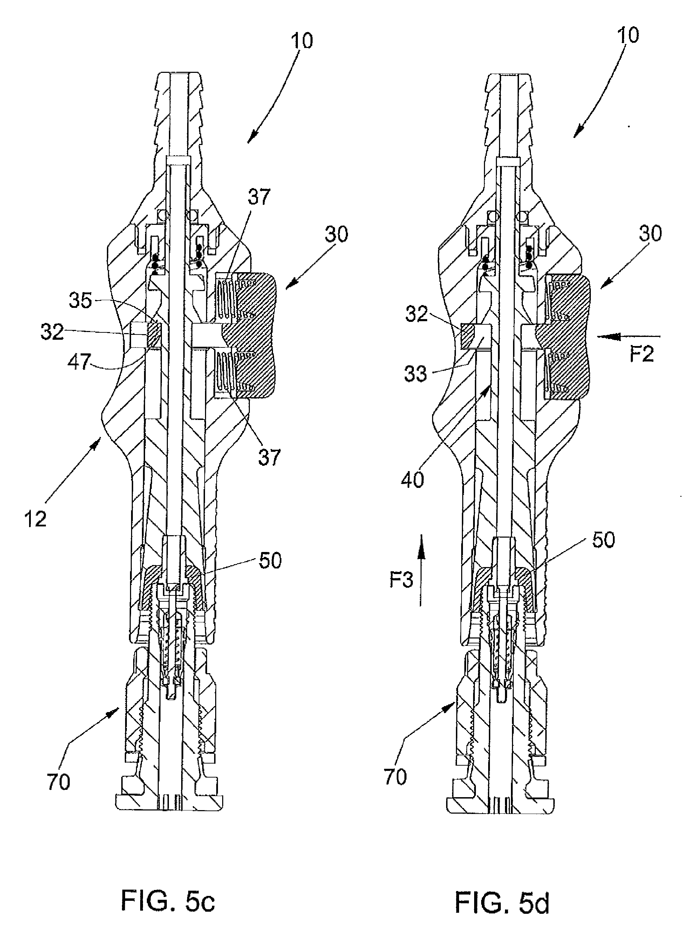

In the immediately successive instant, illustrated in Figure 5(c), the action of elastic return of the springs 37 causes the exit of the release button 30 from the radial seat 18 and the consequent abutting of the surface 35 of the hollow member 32 against the lower shoulder 47 of the first conical portion 44 of the piston 40. At this point the quick connector 10 is fitted to the valve 70. Moreover, thanks to the presence of the seal 50 and to the spring 51, there is perfect tightness between connector 10 and valve 70 during inflation of the tyre.

At the end of the operation of inflation, in order to unfit the connector 10 from the valve 70 it is sufficient to press the release button 30 (arrow F2, Figure 5(d)), so as to allow the piston 40 to slide inside the recess 33 of the member 32 of the release button 30 under the action of the spring 51, with consequent unfitting between valve 70 and connector 10 (arrow F3, Figure 5(d)). Subsequently the springs 37 push the release button outwards and the connector 10 returns in the rest condition, illustrated in Figure 5(a).

From what is stated above it is clear how, thanks to the interaction between piston and release button, the quick connector of the invention can be, advantageously, fitted in a precise and simple manner to an inflation valve of a tyre or other pressurised container, guaranteeing at the same time the maximum tightness in the inflation phase.

Moreover the extension in the body of the connector, allows, advantageously, the user to easily reach closed and confined spaces where at times some types of inflation valves are housed.

Finally, thanks to the concavities formed in the body of the connector, the latter is easy to handle and ergonomic.

Numerous detail variations and changes can be made to the embodiment of the invention described above, within the reach of a person skilled in the art and in any case coming within the scope of the invention expressed by the annexed claims.

## Claims

1. A quick connector (10) for an inflation valve (70) of a tyre or other pressurized containers comprising a body (12) provided with an axial through hole (14) and fitting means (20) to a pressurized fluid source and fitting means (30, 40, 50) to the inflation valve (70) carried by said body (12),
**characterized in that** said fitting means (30, 40, 50) to the inflation valve (70) comprise a piston (40) movable within the axial through hole (14) of the body (12) and suitable for cooperating with a release button (30) projecting from said body (12) and radially movable inside it, thereby allowing the quick connector (10) to be pressure fitted to the inflation valve (70) and subsequently unfitted from the inflation valve (70) at the end of the inflation operation, by acting on the release button (30).

2. A quick connector (10) according to claim 1, **characterized in that** a first portion (44) and a second portion (43) radially extend from said piston (40), the second portion (43) extending upward and suitably spaced from the first portion (44), and **in that** said release button (30) comprises a body (31) from which a member (32) provided with a recess (33) extends, said recessed member (32) being suitable for alternately cooperating with said first portion (44) or said second portion (43), as the quick connector (10) moves from the unfitted condition from the inflation valve (70) to the fitted condition to the inflation valve (70), and vice versa.

3. A quick connector (10) according to claim 2, **characterized in that** said first portion (44) of the piston (40) is substantially conical in shape and delimits a lower shoulder (47) and said second portion (43) is substantially frustoconical in shape and delimits an upper shoulder (45) and a lower shoulder (46).

4. A quick connector (10) according to claim 3, **characterized in that** said recessed member (32) has an abutting surface (35) which abuts, alternately, against said lower shoulder (47) of the first conical portion (44) of the piston (40) and against said lower shoulder (46) of the second frustoconical portion (43) of the piston (40), as the quick connector (10) moves from the unfitted condition from the inflation valve (70) to the fitted condition to the inflation valve (70), and vice versa.

5. A quick connector (10) according to claim 3 or 4, **characterized in that** said recess (33) of the member (32) of the release button (30) has a width slightly greater than the maximum radial extension of the piston (40), thereby allowing the piston (40) to slide inside it, and a conical inner surface (34) with a taper complementary with respect to that of the first conical portion (44) of the piston (40).

6. A quick connector (10) according to any one of the preceding claims, **characterized in that** said body (12) comprises a main portion (11) and an extension (13).

7. A quick connector (10) according to claim 6, **characterized in that** said main portion (11) of the body (12) has a radial seat (18, 18a, 18b) for housing said release button (30), said radial seat (18, 18a, 18b) comprising a first section (18a) suitable for slidably housing the body (31) of the release button (30) and a second section (18b) suitable for slidably housing said recessed member (32) of the release button (30).

8. A quick connector (10) according to claim 7, **characterized in that** it further comprises at least one spring (37) placed within a respective housing seat delimited between a lower surface (36) of the body (31) of the release button (30) and bottom walls (19) of said radial seat (18, 18a, 18b) for housing said release button (30).

9. A quick connector (10) according to any one of the preceding claims, **characterized in that** said piston (40) is provided with a through opening (49) and comprises a substantially cylindrical upper end (41), suitable for cooperating with said fitting means (20) to a pressurized fluid source and an upward tapered lower end (42) suitable for cooperating with the inflation valve (70), a seat (48) for housing sealing means (50) being formed in said lower end (42), said upward tapered lower end (42) being suitable for deforming following an upward sliding thereof within said axial through hole (14) of the body (12), thereby causing a simultaneous and reversible deformation of said seat (48) and the sealing means (50) contained therein, so as to ensure a pressure and tight fitting between said quick connector (10) and said inflation valve (70).

10. A quick connector (10) according to claim 9, **characterized in that** said sealing means consist of an upward tapered seal, which is locked into position within said seat (48) by means of a pawl (60).

11. A quick connector (10) according to claim 9 or 10, **characterized in that** it further comprises elastic means (51) carried by said substantially cylindrical upper end (41), suitable for acting between the body (12) and the piston (40) thereby constantly pushing downward the piston (40) to promote its fitting and unfitting to/from the inflation valve (70).

12. A quick connector (10) according to any one of the preceding claims, **characterized in that** said body (12) has opposite concavities (15) suitable for housing user's fingers.
